# EUROPEAN PATENT SPECIFICATION

(11) **EP 2 461 530 B1**
(45) Date of publication and mention of the grant of the patent: **10.10.2012**
(21) Application number: 10450186.1
(22) Date of filing: 02.12.2010
(51) Int. Cl.: H04L 25/02, H04L 27/26

(54) **Channel estimation in an OFDM transmission system**
Kanalschätzung in einem OFDM-Übertragungssystem
Estimation de canal dans un système de transmission OFDM

(43) Date of publication of application: 06.06.2012
(73) Proprietor: Kapsch TrafficCom AG, 1120 Wien (AT)
(72) Inventor: Czink, Nicolai, 1050 Wien (AT); Zemen, Thomas, 2345 Brunn am Gebrige (AT); Bernadó, Laura, 1050 Wien (AT); Molisch, Andreas, Los Angeles, CA 90089 (US)
(74) Representative: Weiser, Andreas

(56) References cited:
- US-A1- 2009 175 372
- US-A1- 2009 209 206
- Yaniv, R., Kaitz, T.: "Analysis of end-of-burst degradation in the OFDM UL PHY under mobile conditions", IEEE 802.16 Bradband Wireless Access Working Group, vol. IEEE 802.16 Bradband Wireless Access Working Group, no. IEEE C802.16d-04/52 15 March 2004 (2004-03-15), XP002634730, Retrieved from the Internet: URL:http://ieee802.org/16/tgd/contrib/C802 16d-04_52.pdf [retrieved on 2011-04-27]
- "IEEE Standard for Local and metropolitan area networks Part 16: Air Interface for Broadband Wireless Access Systems;IEEE Std 802.16-2009 (Revision of IEEE Std 802.16-2004)", IEEE STANDARD, IEEE, PISCATAWAY, NJ, USA, 29 May 2009 (2009-05-29), pages C1-2004, XP017602116, ISBN: 978-0-7381-5919-5
- PREDRAG SPASOJEVIC ET AL: "Complementary Sequences for ISI Channel Estimation", IEEE TRANSACTIONS ON INFORMATION THEORY, IEEE PRESS, USA, vol. 47, no. 3, 1 March 2001 (2001-03-01), XP011027921, ISSN: 0018-9448

## Description

The present invention relates to a method of channel estimation in an OFDM transmission system having a transmitter and a receiver according to standard IEEE 802.11x.

Car-to-car and car-to-infrastructure systems are currently being standardized. All standards on the dedicated 5.9 GHz band base on IEEE 802.11 and the extensions particularly devised for vehicle use, 802.11p. These extensions are limited to halving the bandwith, and by that having a longer cyclic prefix. In the present disclosure the term "IEEE 802.11x" refers to all variants and extensions of the basic standard IEEE 802.11.

A significant problem in the mobile radio channel is the fast variation of the channel over time. These variations need to be tracked by the receiver to achieve a trustworthy estimate of the channel in order to coherently decode the symbols. The current channel training sequence ("pilot sequence") that is used in IEEE 802.11x is not well suited for this problem. The reason for this shortcoming in the standard was that IEEE 802.11x was initially designed for nomadic applications (WiFi on laptop computers or smart phones), where mobility is nomadic only.

Still, the IEEE 802.11x pilot pattern was chosen for the ITS standards - the reason is simply that chipsets are already available on the market. These chipsets will initially achieve only reduced performance in non-line-of-sight and highly-mobile environments. Thus, an improvement of the current standards is vital to enable robust communications for safety-related communications.

The main problem of an extension of the standard is to stay compatible with older chipsets due to the long lifetime of cars. Improvements to the standard should be backwards compatible such that already deployed chipsets do not need to be changed.

It is an object of the present invention to devise a method of channel estimation in an OFDM system according to IEEE 802.11x which is backwards compatible and has an improved estimation performance suited for fast varying channels in vehicular environments.

This object is achieved with a method of channel estimation in an OFDM transmission system having a transmitter and a receiver according to standard IEEE 802.11x, comprising:
in the transmitter, setting an identifier in a reserved bits section of a header following a preamble in a physical layer frame, attaching a postamble at the end of said frame without altering a length information in the header, including the preamble and the postamble and transmitting said frame including the preamble and the postamble over the channel,
in the receiver, checking said reserved bits section in the header of a frame received over the channel for said identifier and, if said identifier is detected, using the postamble and the preamble of the frame including the preamble and the postamble to estimate the channel.

The invention enables the beneficial use of postambles within the framework of conventional IEEE 802.11x standards by extending the 802.11x pilot pattern. The postamble added to the frame is announced in a to-date unused packet header field. The extension is done in a transparent way, such that conventinal receivers (not knowing about the new pilot pattern) maintain their performance. However, receivers taking the new pattern into account have two major advantages: (i) significantly increased receiver performance in terms of BER (bit error rate), and (ii) significantly lower receiver complexity. The result is a tremendous reduction of implementation complexity for achieving a good system performance.

Setting an identifier in the reserved bits area of a frame header is known in the art per se, see US 2009/0175372 A1. The identifier is used for indicating a control sequence inside of a frame according to the IEEE 802.16 standard, which is a different purpose in a different transmission standard.

The benefits of using a postamble in addition to a preamble for channel estimation purposes is known in the art per se, see e.g. R. Yaniv et al., "Analysis of end-of-burst degradation in the OFDM UL PHY under mobile conditions", vol. IEEE 802.16 Broadband Wireless Access Working Group, no. IEEE C802.16d-4/52 (2004-03-15); "IEEE Standard for Local and Metropolitan area networks Part 16: Air Interface for Broadband, Wireless Access Systems; IEEE Std 802.16-2009 (Revision of IEEE Std 802.16-2004)" IEEE STANDARD, IEEE, Piscataway, NJ, USA, 29 May 2009, pages C1-2009, ISBN: 978-0-7381-5919-5;US 2009/0209206 A1; S. Plass et al. (eds.), "Channel estimation by exploiting sublayer information in OFDM systems", Multi-Carrier Spread Spectrum 2007, pp. 387-396, 2007 Springer; and S. Rossi and R.R. Müller, "Slepian-based two-dimensional estimation of time-frequency variant MIMO-OFDM channels", IEEE Signal Process. Lett., vol. 15, pp. 21-24, January 2008. Pre- and postambles can e.g. be used as input to a 2-dimensional Wiener Filter estimating the channel parameters over frequency and time. Therefore, in one embodiment of the invention the channel is estimated by 2-dimensional interpolation in time and frequency between the preamble and the postamble by means of a Wiener Filter.

The identifier announcing the postamble for receivers capable of handling the postamble can be set in any of the reserved bits of the IEEE 802.11x physical layer frame header. In a first embodiment, the identifier is a flag in the reserved bit of the signal section of the header. Alternatively, the identifier is a code which is set in one or more of the reserved bits of the service bits section of the header.

The postamble can be any given set ot data suited for channel estimation purposes. Preferably, the postamble is an OFDM symbol containing a known pilot pattern, as will be readily aware to the person skilled in the art.

While the method of the invention is basically suited for all variants of IEEE 802.11x, it is particularly suited for application in OFDM transmission systems according to the IEEE 802.11p standard for highly mobile environments.

The invention will now be described further by means of exemplary and preferred embodiments thereof under reference to the enclosed drawings, wherein:
Figs. 1 and 2 show pilot patterns according to the standard IEEE 802.11x and according to the method of the invention, respectively;
Fig. 3 shows the incorporation of the postamble and its identifier in the physical layer frame of an OFDM transmission scheme according to the invention for use in the inventive channel estimation method; and
Fig. 4 shows the performance of the inventive method in comparison to conventional channel estimation methods.

The present method is based on the IEEE 802.11 standard and all its variants, improvements and extensions, herein comprised by the general denominator "802.11x", including standards 802.11a, 802.11b, 802.11g, 802.11n, 802.11p, et cet.

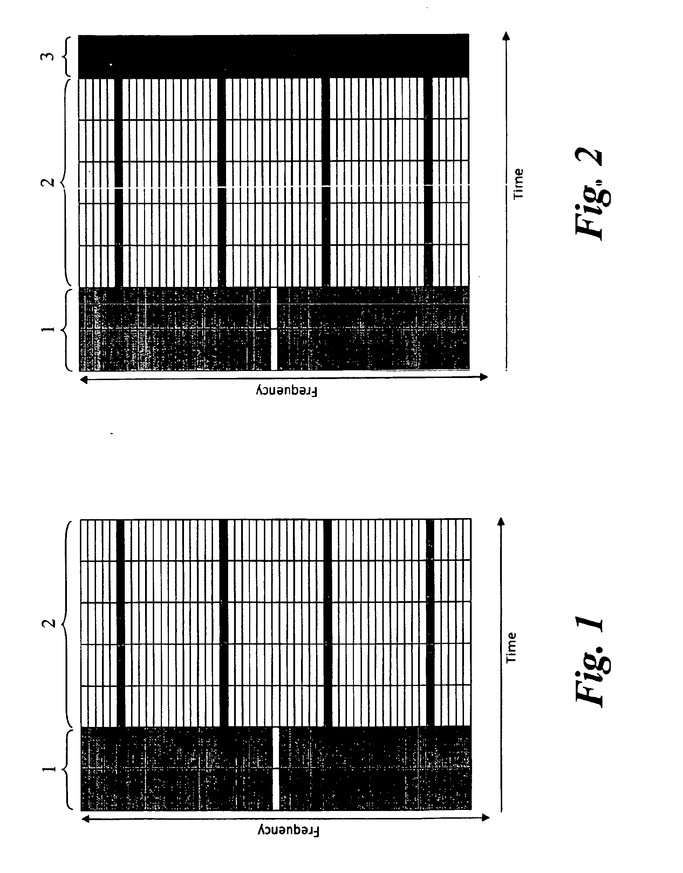

The current structure of an OFDM frame (data packet) in IEEE 802.11p is shown in Fig. 1 comprising 52 subcarriers in the frequency range over symbol time. The first two (actually: more than two) OFDM symbols are used as training symbols ("preamble") containing known pilots. Then, throughout the whole frame, only 4 subcarriers are used as pilots for phase and clock tracking.

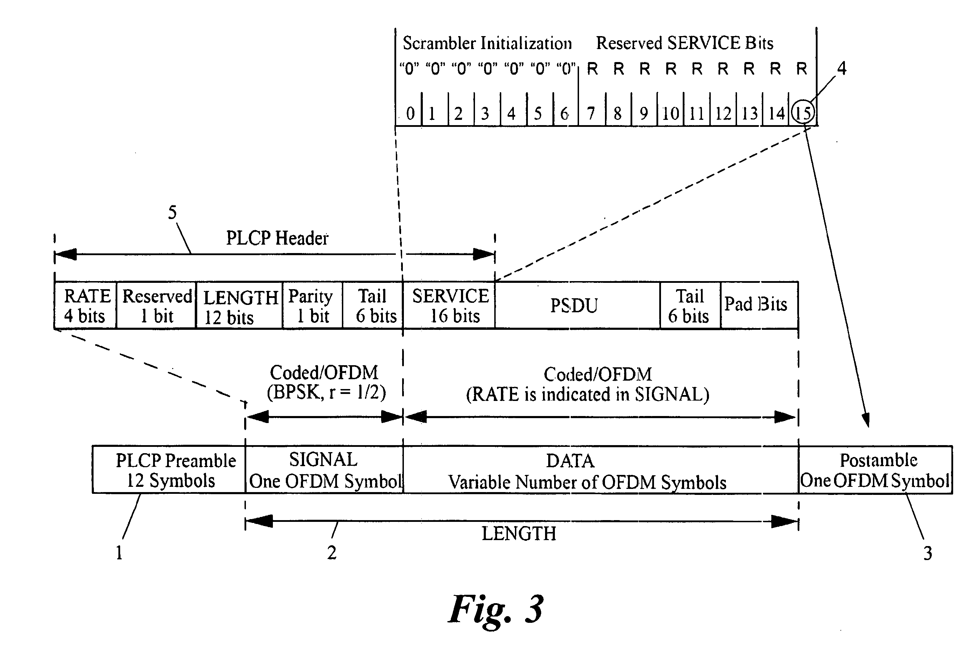

Figs. 2 and 3 show an improved pilot pattern and an improved physical layer (PHY) frame (data packet) for an improved channel estimation method in an OFDM transmission system extending the standard IEEE 802.11x, in particular 802.11p. At the end of a conventional physical layer frame 2 preceded by a preamble 1 according to IEEE 802.11x, a postamble 3 is attached which consists of one or more OFDM symbols containing a known pilot pattern. While postamble 3 does change the physical length of the frame 2, the LENGTH information in the header "PLCP" (Physical Layer Convergence Procedure-header) 5 of the frame 2 is not changed with respect to its conventional (Fig. 1) use and value. Therefore, conventional receivers will ignore postamble 3.

One or more of the reserved bits in the reserved bits section of the PLCP header 5 is/are used to set an identifier 4 therein which indicates the existence of postamble 3. The identifier 4 can be a flag set in a single bit of the "Reserved SERVICE Bits" section of the PLCP header 5, as shown in Fig. 3 for bit 15, or a flag set in the single "Reserved 1 bit" following the 4 RATE bits in the PLCP header 5. Alternatively, more than 1 bit could be used of the available (in total: 1 + 9) reserved bits of the PLCP header 5 to set a code therein (maximum code length: 1 + 9 = 10 bits), indicating the presence and preferably also coding a type of the postamble 3 used.

Extending the pilot pattern in this way has two advantages: (i) the channel can be tracked accurately; (ii) the postamble 3 is transparent to older receivers since the latter stop receiving after the number of OFDM symbols indicated in the LENGTH field has been decoded; such older receivers will simply observe a channel that is occupied for one or more further symbol time(s).

In an improved receiver capable of using postamble 3 in addition to preamble 1, the reserved bit(s) in the header 5 is/are checked for the presence of the identifier 4 and, if such an identifier 4 is detected, postamble 3 is used in combination with preamble 1 to estimate the channel.

Estimating the OFDM transmission channel by means of pre- and postambles 1, 3 is known in the art *per se* and e.g. disclosed in *S. Rossi and R.R. Müller*, loc. cit.. In particular, the channel estimation technique involves the use of a 2-dimensional interpolation - in time and frequency - between the preamble 1 and the postamble 3 by means of a Wiener Filter.

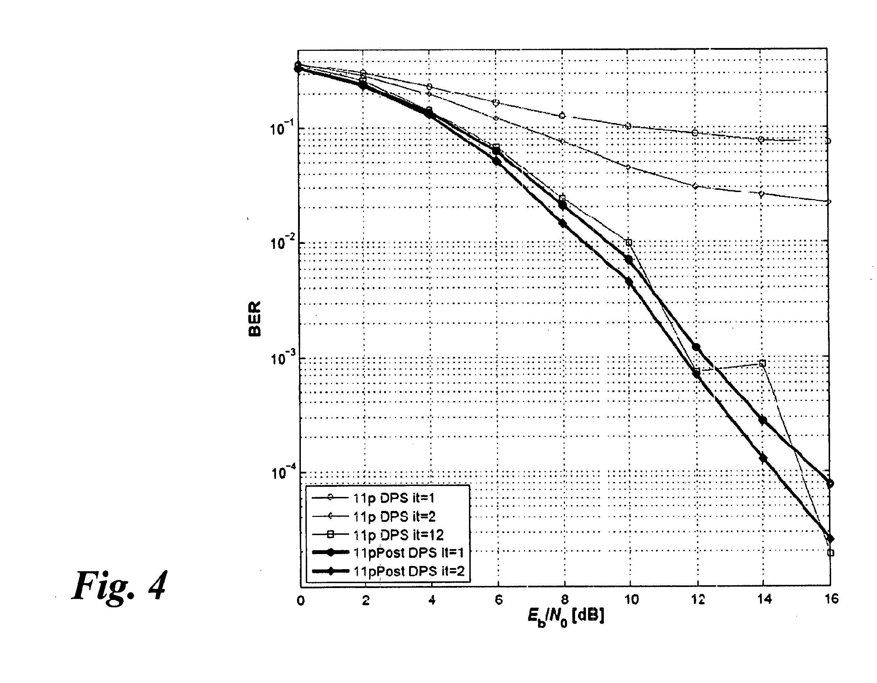

Fig. 4 shows the results of a comparison test of the new method of Fig. 3 and new pilot pattern of Fig. 2 as compared to a conventional channel estimation technique involving only preamble 1. Fig. 4 shows the bit error rate (BER) over signal-to-noise ratio (SNR) E_{b}/N₀ for five different channel estimation methods all of which use discret prolate spheroidal (DPS) sequences to model and estimate the channel. The first three curves labelled "11p DPS" refer to conventional channel estimation techniques with 1, 2, and 12 iterations of the Wiener Filter, respectively. The last two curves labelled "11pPost DPS" refer to two embodiments of the improved method including pre- and postambles 1, 3 with one and two iterations, respectively.

The comparison was made by means of an 802.11p link level simulator. As simulated environment, a NLOS channel with 400 ns maximum excess delay and a Doppler profile corresponding to a relative speed of 150 km/h was used. For the conventional pilot pattern of Fig. 1, the block length was 34 OFDM symbols corresponding to 200 bytes of QPSK modulated data with a code rate of ½. For the improved pilot pattern of Fig. 2, the block length was 35 OFDM symbols (because of the additional postamble 3). The implemented receiver used the theorems of "Iterative soft channel estimation and detection" disclosed i.a. in T. Zemen, C.F. Mecklenbräuker, J. Wehinger, and R.R. Müller, "Iterative joint time-variant channel estimation and multi-user detection for MC-CDMA", IEEE Trans. Wireless Commun., vol. 5, no. 6, pp. 1469-1478, June 2006; T. Zemen, H. Hofstetter, and G. Steinböck, "Successive Slepian subspace projection in time and frequency for time-varaint channel estimation", in 14th IST Mobile and Wireless Communication Summit (IST SUMMIT), Dresden, Germany, June 19-22 2005; and *S. Rossi and R.R. Müller*, loc. cit..

The simulations were performed over 100 frames. The conventional pilot pattern showed an error floor in BER for few (1 or 2) iterations. Only when increasing the number of iterations to a high number an acceptable receiver performance was achievable. In contrast thereto, for the improved channel estimation method, already the first iteration led to acceptable receiver performance, and two iterations corresponded to an optimum receiver.

The invention is not limited to the specific embodiments enclosed herein but encompasses all variants and modifications thereof which are comprised by the enclosed claims.

## Claims

1. A method of channel estimation in an OFDM transmission system having a transmitter and a receiver according to standard IEEE 802.11x, comprising:
in the transmitter, setting an identifier in a reserved bits section of a header (5) following a preamble (1) in a physical layer frame, attaching a postamble (3) at the end of said frame (2) without altering a lenght information in the header (5), which indicates the length of the physical layer frame before attaching said postamble, and transmitting said frame including the preamble and the postamble (1 - 3) over the channel,
in the receiver, checking said reserved bits section in the header (5) of a frame received over the channel for said identifier and, if said identifier is detected, using the postamble (3) and the preamble (1) of the frame including the preamble and the postamble (1 - 3) to estimate the channel.

2. The method of claim 1, wherein the channel is estimated by 2-dimensional interpolation in time and frequency between the preamble (1) and the postamble (3) by means of a Wiener Filter.

3. The method of claim 1 or 2, wherein said identifier is a flag in a reserved bit of including the preamble and the postamble signal section of the header (5).

4. The method of claim 1 or 2, wherein said identifier is a code set in one or more of reserved bits of a service bits section of the header (5).

5. The method of any of the claims 1 to 4, wherein said postamble (3) is an OFDM symbol containing a known pilot pattern.

## Patentansprüche

1. Verfahren zur Kanalschätzung in einem OFDM-Übertragungssystem, welches einen Sender und einen Empfänger nach dem Standard IEEE 802.11x hat, umfassend:
im Sender: Setzen einer Kennung in einem Bereich reservierter Bits eines Headers (5), der einer Präambel (1) in einem Frame der physikalischen Schicht folgt, Anfügen einer Postambel (3) an das Ende des genannten Frames (2) ohne eine Längeninformation im Header (5) zu ändern, welche die Länge des Frames der physikalischen Schicht vor dem Anfügen der genannten Postambel angibt, und Senden des genannten, die Präambel und die Postambel einschließenden Frames (1 - 3) über den Kanal,
im Empfänger: Prüfen des genannten Bereichs reservierter Bits im Header (5) eines über den Kanal empfangenen Frames auf die genannte Kennung und, wenn die genannte Kennung detektiert wird, Verwenden der Postambel (3) und der Präambel (1) des die Präambel und die Postambel einschließenden Frames (1 - 3), um den Kanal zu schätzen.

2. Verfahren nach Anspruch 1, bei welchem der Kanal durch 2-dimensionale Interpolation in Zeit und Frequenz zwischen der Präambel (1) und der Postambel (3) mithilfe eines Wiener-Filters geschätzt wird.

3. Verfahren nach Anspruch 1 oder 2, bei welchem die genannte Kennung ein Flag in einem reservierten Bit eines Signalbereichs des Headers (5) ist.

4. Verfahren nach Anspruch 1 oder 2, bei welchem die genannte Kennung ein in einem oder mehreren reservierten Bits eines Servicebitbereichs des Headers (5) gesetzter Code ist.

5. Verfahren nach einem der Ansprüche 1 bis 4, bei welchem die genannte Postambel (3) ein OFDM-Symbol ist, das ein bekanntes Pilot-Muster enthält.

## Revendications

1. Procédé d' estimation de canal dans un système de transmission OFDM ayant un émetteur et un récepteur selon le standard IEEE 802.11x, comprenant:
dans l'émetteur, placer un identifiant dans une section de bits réservés d'un entête (5) suivant un préambule (1) dans une trame de couche physique, ajouter un postambule (3) à l'extrémité de ladite trame (2) sans altérer une information de longueur dans l'entête (5), qui indique la longueur de la trame de couche physique avant d'ajouter ledit postambule, et transmettre ladite trame incluant le préambule et le postambule (1-3) via le canal;
dans le récepteur, vérifier ladite section de bits réservés dans l'entête (5) d'une trame reçue via le canal quant à dudit identifiant et, si ledit identifiant est détecté, utiliser le postambule (3) et le préambule (1) de la trame incluant le préambule et le postambule (1-3) pour estimer le canal.

2. Procédé selon la revendication 1, dans lequel le canal est estimé par une interpolation à deux dimensions en temps et en fréquence entre le préambule (1) et le postambule (3) au moyen d'un filtre de Wiener.

3. Procédé selon la revendication 1 ou 2, dans lequel ledit identifiant est un drapeau dans un bit réservé d'une section de signal de l'entête (5).

4. Procédé selon la revendication 1 ou 2, dans lequel ledit identifiant est un code placé dans un ou plusieurs bits réservés d'une section de bits de service de l'entête (5).

5. Procédé selon l'une des revendications 1 à 4, dans lequel ledit postambule (3) est un symbole OFDM contenant une séquence pilote connue.
